Europäisches Patentamt

European Patent Office

Office européen des brevets

(11) Publication number: **0 005 328**
A1

(19)

(12) **EUROPEAN PATENT APPLICATION**

(21) Application number: **79300632.1**

(22) Date of filing: **17.04.79**

(51) Int. Cl.²: **B 62 D 63/06,** B 60 P 5/00

(30) Priority: **21.04.78 US 898976**

(43) Date of publication of application: **14.11.79**
Bulletin **79/23**

(84) Designated Contracting States: **DE FR GB IT**

(71) Applicant: **Golze, Richard Ralph, 637 Kingsley Trail, Bloomfield Hills Michigan (US)**

(72) Inventor: **Golze, Richard Ralph, 637 Kingsley Trail, Bloomfield Hills Michigan (US)**

(74) Representative: **Wood, John Irwin, 45 Kent Avenue, Ealing London W13 8BE (GB)**

(54) **A vehicle including a vehicle extender.**

(57) A vehicle (12) has a body extender (10) which is connected to it to form an integral part therewith. The extender has two frame members (58, 60) which removably plug into socket type receiving means (84) in the rear bumper (76) of the vehicle.

The extender can carry a removable housing (14) and this may incorporate mechanical (102, 106) weight indicating means and an electric type of indicator (112) which is operated by a switch (110) when the extender is overloaded.

A vehicle including a vehicle extender

This invention relates to a vehicle including a vehicle extender connected to, or adapted for connection to, the vehicle.

The energy crisis has been the cause of dramatic changes in many aspects of transportation, including the automobile.  Significant changes in motor design and styling have been recently introduced by the major automobile manufacturing companies, all with the view to increasing the efficiency of the automobile.  One of the most dramatic and radical programmes being undertaken by these companies is the 'scale down' programme under which the automobile manufacturing companies are systematically reducing the overall size of each of their model lines.  This reduction in vehicle size has touched every aspect of the automobile, including the boot capacity.

Accordingly, the newer smaller model automobiles have only very limited boot space, both in terms of total volume, and in terms of breadth and depth.  This has all resulted in a pressing need for selectively extending the body of the automobile when luggage requirements exceed the boot capacity.

It has been known for many years that one convenient way of overcoming the problem of a lack of carrying capacity is either to fit a roof rack to the vehicle or to equip it with a tow bar to which a trailer can be coupled as necessary.  The additional capacity afforded by a roof rack is very limited and therefore the towed trailer is more popularly adopted especially for bulky and heavy loads.

The towed trailer is usually connected to the vehicle through a ball and socket joint which allows sideways articulation between the vehicle and the trailer and limited vertical movement. This type of connection is of limited value since the trailer does not follow exactly the line of the towing vehicle and may tend to over-run it on inclines and cause an accident through 'jack-knifing' with the vehicle. With heavier trailers over-run brakes are fitted but these usually require the vehicle driver to get out of his vehicle and make a manual adjustment to the trailer when reversing. The vehicle is also difficult to control in reverse due to the single articulated joint and this has given rise to many accidents.

It is also a feature of towed vehicles that their loading must be even otherwise too great an influence is placed on the steering of the vehicle through the trailer tending either to pull down on the rear of the vehicle and thus make the steering too light or, alternatively, to lift the rear of the vehicle to cause the front of the vehicle to dip. Furthermore, the tow bars fitted to vehicles are customarily fitted to the chassis of the vehicle and by-pass any energy absorption features incorporated in the rear bumper of the vehicle so that any impact with the rear of the towed vehicle is transmitted directly to the towing vehicle without being absorbed by the energy absorbing devices in the bumper.

The present invention is intended to provide a way of extending the carrying capacity of a vehicle by providing a trailer in the form of a body extender which enables the extender to be operatively part of the vehicle and to react with the vehicle as if it was part of the vehicle.

Accordingly the vehicle extender comprises a frame mounted on wheels connected to the frame through spring means, the frame including two frame members having coupling means for engaging with corresponding receiving means extending from the vehicle to couple the extender with the vehicle.

The extender is thus able to move as one with the vehicle and when coupled gives the advantageous effect of acting as part of the vehicle. The extender can preferably be released by a suitable lever locking mechanism so that it is able to be removed from the vehicle when not needed. The frame members may be given a pivotal break about a horizontal axis to allow relative vertical movement between vehicle and extender.

In order to allow any impacts with the rear of the extender to be absorbed by the vehicle the coupling between the extender and the vehicle is preferably incorporated in the bumper of the vehicle so that any hits on the extender are transmitted directly to the bumper and any energy-absorbing means incorporated therewith.

If the coupling between the vehicle and the extender are made of a plug and socket type the extender is able positively and correctly to be positioned relative to the vehicle and coupled thereto.

The capacity of the extender can be adjusted by providing a housing or housings on the frame of the extender. The housing can conveniently slide on to the frame on tracks and be secured thereto. A weight indicator can be added to the extender to indicate the weight loaded on the extender so that overloading is avoided. Further, an

- 4 -

0005328

electric overload system can be used to give a visual or audible indication, if necessary, of an overload condition.

In order that the invention may be readily understood one embodiment thereof will now be described with reference to the accompanying drawings, in which:

Figure 1 is a partial sectional view in elevation with certain parts partially cut away showing a vehicle body extender of the present invention along with the rear portion of a towing vehicle;

Figure 2 is a top view of the vehicle body extender and vehicle of Figure 1;

Figure 3 is an enlarged sectional view in elevation, showing coupling mechanism coupling the vehicle body extender to the towing vehicle, with the coupling shown in its locked position;

Figure 4 is the coupling mechanism of Figure 3 in its unlocked position;

Figure 5 is an enlarged sectional view of the track upon which the housing members of the vehicle body extender of Figure 1 may be slidably mounted; and

Figure 6 is a weight alarm circuit that may be used in connection with the vehicle body extender of Figure 1.

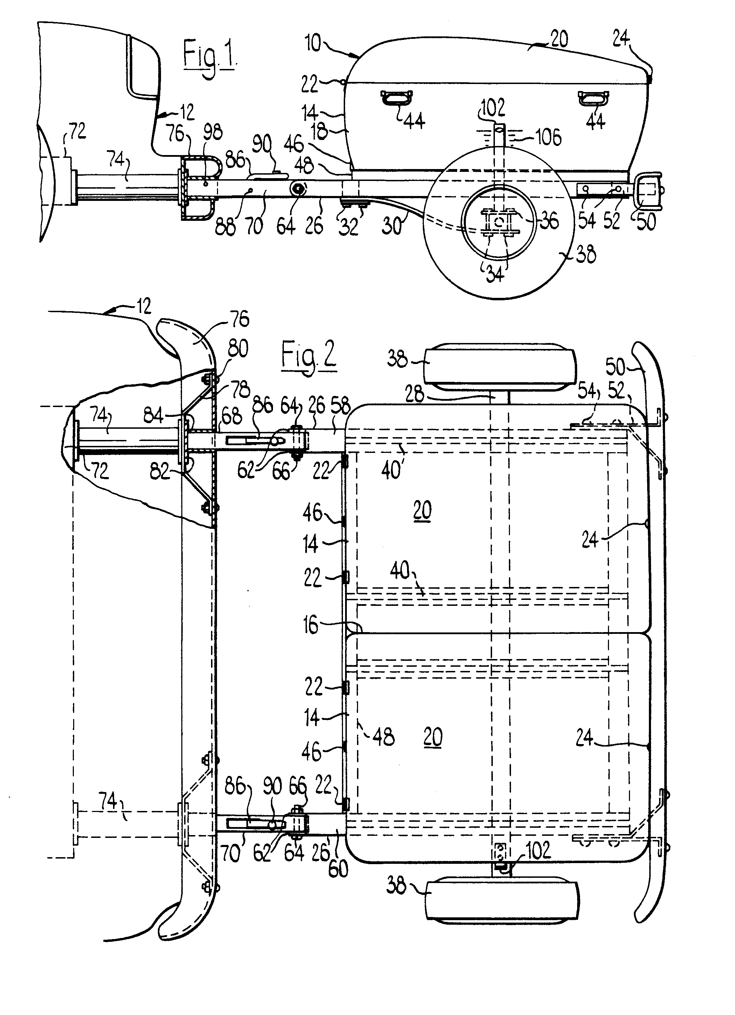

Referring now to the drawings, and in particular to Figures 1 to 5, a vehicle 12 with a vehicle body extender 10 is shown.

The vehicle body extender 10 is adapted to be closely coupled to and be towed by a towing vehicle 12 such as an automobile. As will be explained in further detail, the vehicle body extender 10 is rigidly coupled to the towing vehicle 12 by at least two connections to steer with said towing vehicle 12, both in a forward and reverse direction.

The vehicle body extender 10 is provided with at least one housing 14, and, as shown in Figure 1 and 2, two housings 14 having a longitudinal division therebetween. Each of the housings 14 are shown as being generally equally in overall dimensions and having the same internal capacity. The housings 14, of course, could have a transverse division 16 therebetween, and one housing could be of different size than the other housing. The housing 14 may be shaped in many varied forms, for example, in the form of bushel baskets, picnic baskets, or could be shaped in a form to carry golf clubs or the like.

The housings 14 are each provided with a carrying portion 18 which, as the name implies, carry and transport the material to be towed. Each carrying portion 18 may be each covered by a cover 20 which may be hingedly or otherwise removably attached to the carrying portion 18. As can be seen in Figures 1 and 2, the hinges 22 are provided at the forward end of the housing 14 (toward the towing vehicle 12).

The covers 20 and the carrying portions 18 may be aerodynamically designed to reduce the air resistance flowing from the towing vehicle 12 and the design may be a continuation of the body lines of the towing vehicle. The cover 20 may be provided with a lock 24 to secure the cover 20 to its carrying portion 18. An appropriate seal (not shown) may be provided between the cover 20 and the carrying portion 18 to effect a water-tight seal therebetween.

The housing is supported by a frame 26 by means to be described in further detail below. The frame 26 is generally formed in a box fashion of rectangular cross section, having a number of transverse and longitudinal members.

The frame 26 is resiliently attached to an axle 28 by means of a spring 30. The spring 30 which is a single tapered leaf spring attached to the frame toward the forward end thereof, by suitable fastening means such as bolts 32. The spring 30 is attached to the axle 28 by suitable fastening means such as bolts 34 which capture the axle 28 between a fastening plate 36 and the spring 30. The spring 30 may alternatively be a conventional multi-leaf spring, a coil spring, a stabilizer bar, or any other suitable resilient spring means for the axle 28.

The axle 28 is a continuous rigid member has tyres 38 rotatably mounted at each of its ends. The axle is also equipped with suitable braking means (not shown) which may be operatively integrated with the brakes of the towing vehicle 12 such that they are actuated simultaneously therewith. Further, suitable brake, directional and rear lights (all not shown) are also operatively integrated with the same systems provided on the towing vehicle 12, to operate simultaneously therewith.

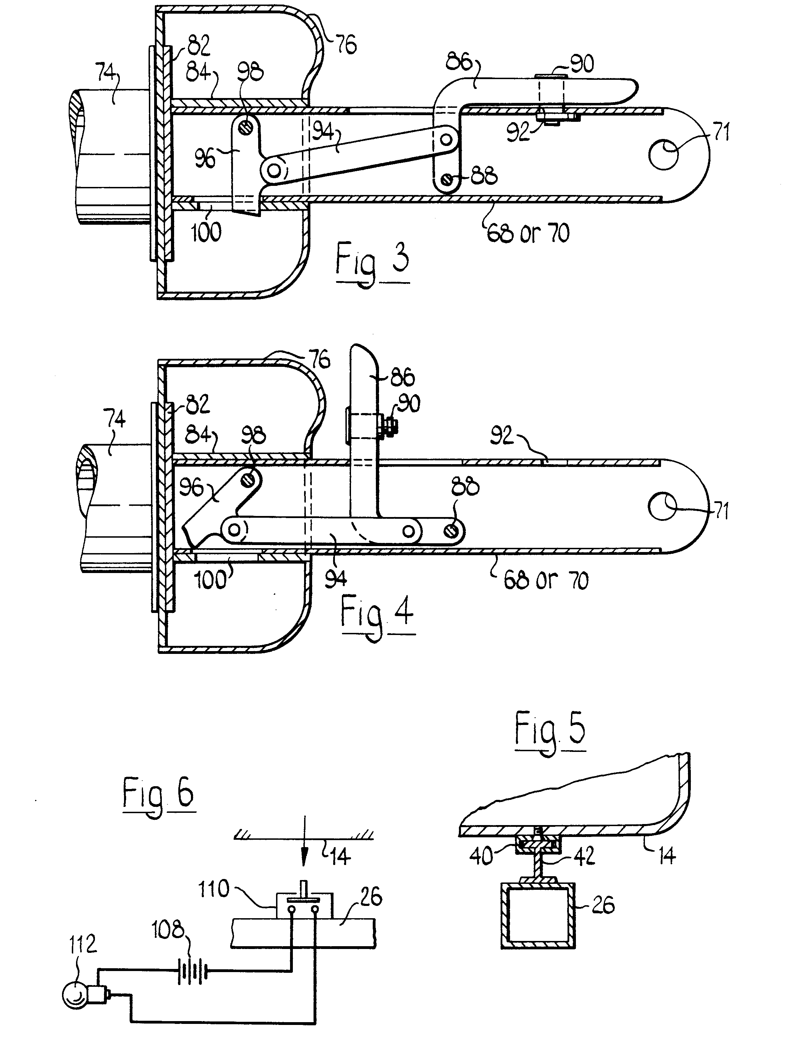

The frame 26, as before mentioned, is provided with a number of longitudinal and transverse members which support the housing 14. The housing 14 is slidably removed from the frame 26 by suitable slide means which, as can be seen in Figure 5, includes longitudinally extending tracks 42 fastened to the frame 26. Tracks 40 attached to housing 14 are substantially 'C' shaped to accept the substantially 'T' shaped members 42. This arrangement allows for the housing 14 to be slid on to and off the frame 26. To further facilitate this slidable movement, handles 44 are provided on the housing 14 to slide, lift, and pull the housing 14.

A housing lock 46 is provided in the housing 14 to lock it to the frame 26. The housing lock 46 is so

positioned in the forward part of the housing 14 to lock it to a transverse member 48 of the frame 26, there being one such lock 46 for each housing 14.

The vehicle body extender 10 is further provided with a bumper 50 which is suitably attached to the frame 26 by a bumper bracket 52. The bumper bracket 52 is fastened to the frame 26 and the bumper 50 by bolts 54.

The bumper 50, the bumper bracket 52 and the frame 26 are in longitudinal alignment so that the energy of any rear impact to the bumper 50 will be transferred to and through the longitudinally extending members 58 and 60. This important feature of the vehicle body extender 10 will be explained in further detail below.

The longitudinally extending members 58 and 60 each forwardly terminate in and define a pivot point for the vehicle body extender 10. More particularly, each member 58 and 60 are provided at their forward ends with apertured ears 62 for receiving a pivot pin 64 having a nut 66 threadably secured thereto. Each pivot pin 64 pivotally captures longitudinally extending frame members or extensions 68 and 70; each such extension 68 and 70 having apertures 71 in alignment with the apertures in the ears 62, for receiving the pivot pins 64 therethrough. This arrangement facilitates relative vertical movement of the extensions 68 and 70 with members 58 and 60 and therefore with the entire vehicle body extender 10 with the towing vehicle 12. That is, the entire vehicle body extender can pivot about the pivot pin 64 and thus with respect to the towing vehicle 12.

The towing vehicle 12 is provided with a frame 72 which at its rear terminates in an energy absorption device 74. These energy absorption devices 74 may be, for example, of the type mandated by the US Department of Transportation to absorb impacts to the towing vehicle bumper 76 to which the energy absorption devices 74 are attached. More particularly, the bumper 76 is connected to a bumper bracket 78 by bolts 80. The bumper bracket is secured to the energy absorption devices 74 by means of fastening plate 82 which may be welded or otherwise secured to the bracket 78. The fastening plate is provided with a hollow extension 84 which is open at the rearward end to receive the frame extensions 68 and 70 of the vehicle body extended 10. Typically, the frame extensions 68 and 70 as well as the frame 26 of the vehicle body extended 10 will be rectangular in cross section and, similarly, the hollow extension 84 will be rectangular in cross section to receive extensions 68 and 70.

As can best be seen in Figures 3 and 4, the vehicle body extender 10 is mechanically coupled to the towing vehicle 12 at the mating ends of extensions 68 and 70, and the hollow extension 84 with a plug and socket type connection. Each frame extension is provided with an internal locking mechanism comprising a manually operated pivotal lever 86, which pivots about pin 88. The lever 86 is provided with a suitable lock 90 which is of the key actuated rotary type lockably to engage the extensions 68 or 70 at an opening 92 provided therethrough. The lever 86 is connected by a link 94 to a locking lever 96 which pivots about pin 98. The locking lever 96 is pivotally driven into and out of a longitudinally extending slot 100 provided in the frame extensions 68 and 70 and the hollow extension 84. In figure 3 the lever 86 is shown in its locked position with the lock 90 lockably inserted within the opening 92. In this position the locking lever 96 has been driven in to the slot 100 to engage the forward end thereof to restrict any rearward motion of the extensions 68 and 70. The forward motion of the extension is restricted by the abuttment of the forward end of the extensions, against
the plate .82.

Accordingly, the extensions 68 and 70 and thereby, the
entire vehicle body extender 10 are securely coupled to
the hollow extension and to the towing vehicle 12.
Figure 4 illustrates the unlocking of the extensions 68
and 70 from the hollow extension 84 by the moving of the
lever pivotally forward thus driving the locking lever
96 out of the slot 100.   At this point, the extensions
68 and 70 may be freely withdrawn from the hollow
extensions 84 to uncouple the vehicle body extender 10
from the towing vehicle.   It should be pointed out that
this arrangement permits the close coupling of the vehicle
body extender 10 to the towing vehicle 12 and there may
be only about 30 cms between the rearward end of the
bumper 76 and the housing 14.   The opened ends of the
hollow extension 84 may be suitably covered when the
extensions 68 and 70 are withdrawn therefrom by a cap
(not shown) or the like.

The vehicle body extender 10 thus provided is a highly
efficient way of enlarging the luggage capacity of the
towing vehicle 12 without any significant loss of
economy of steerability of the towing vehicle.   To
ensure that certain luggage limits are not exceeded,
which might adversely affect that steerability, the
vehicle body extender is provided with a weight measuring
means which might include an indicator rod 102 which is
attached to the axle 28 by suitable fastening means such
as bolts 104 or the like.   The indicator rod 102 will
ride with the axle, and accordingly will measure the
movement of the axle with respect to the frame 26 and/
or the housing 14.   A scale 106 may be provided on the
housing to denote the weight increments being added to
the vehicle body extender 10.   More particularly, when
luggage is placed into the housing 14, the added weight will tend to deflect the springs 30 and the housing 14 will tend to move downwardly towards the axle 28 as more and more weight is added. The indicator rod 102 and the scale 106 may be provided on each side of the vehicle body extender 10 to denote not only the total weight but any transverse unbalance of the weight in the housing 14. Both values will be important to the vehicle operator to ensure that the towing vehicle 12-body extender 10 combination will perform properly when confronted with various road conditions.

In addition to weight increments, the scale may also denote the maximum allowable weight that may be carried by the vehicle body extender. This maximum scale reading can be used in connection with an alarm system that could energise a light, buzzer, or bell within the towing vehicle. For example, Figure 6 shows a signalling system using the towing vehicle 12 battery 108 which can be electrically connected to a switch 110 that can be closed by the indicator rod 102 when it has reached a certain displacement with respect to the scale 106. A strain gauge can also be applied to the spring 30 to measure a change in its properties as it relates to weight added to the housing 14. These weight related signals can be used to close the switch 110 to energise the alarm 112. The alarm 112 as before mentioned could be provided in the towing vehicle 12, possibly a buzzer at a dashboard location. The alarm 112 could also be provided at the housing 14 area immediately to provide an overweight alarm while the luggage was being loaded within the housing 14.

Another important function of the vehicle body extender 10 is the transfer or rear impact energy from extender bumper 50 through the longitudinally extending members 58 and 60 to be ultimately absorbed by the energy absorption devices 74. As can be seen in Figures 1 and 2 the extender bumper 50 is in longitudinal alighment with the members 58 and 60 and with the towed vehicle bumper 76 and the hollow extensions 84 which terminate in the energy absorption devices 74. This alighment of the structural parts ensures that the extender bumper 50 will act generally the same as the towing vehicle bumper 76 in terms of absorbing rear impact energy.

It can be seen from the above description that the vehicle body extender 10 as contemplated by the present invention is much more than a trailer; it is truly an extension of the body of the towing vehicle. The driver will be only slightly aware of any changes in the performance of his automobile when the extender is attached or unattached. The styling of the vehicle body extender 10 can be closely coordinated with the style of the automobile in terms of colour, design of the housing, the provision of bumpers and the like. The vehicle body extender 10 and its various parts can be manufactured from a wide range of materials already used in the auto industry. For example, the housing could be moulded plastic of the type used to make automobile body panels.

Claims:

1. A vehicle (12) including a vehicle extender (10) connected to or adapted for connection to the vehicle, characterised in that the vehicle extender comprises a frame (14) mounted on wheels (36) connected to the frame (14) through spring means (30), the frame (14) including two frame members (58,60) having coupling means (96) for engaging with corresponding receiving means (84) extending from the vehicle (12) to couple the extender with the vehicle.

2. A vehicle as claimed in Claim 1 in which the frame members (58,60) are provided with a pivotal connection (64) to allow relative movement in a vertical direction between the vehicle and the extender.

3. A vehicle as claimed in Claim 1 or Claim 2 in which the coupling means (84) are included in a bumper (76) of the vehicle (12) and the bumper (76) is attached to the vehicle by energy absorption means (74).

4. A vehicle as claimed in any preceding claim in which the coupling means (96) engage with the corresponding receiving means (84) in a plug and socket type connection.

5. A vehicle as claimed in any preceding claim in which the coupling means (96) include a releasable locking device having a lever (96) engageable with a part (100) of the corresponding receiving means (84).

6. A vehicle as claimed in Claim 5 in which the releasable locking device further includes a pivot mounting (98) for the lever (96) carried within a frame member (58, 60) and linkage means (94) operatively connecting the lever (96) with a pivotally mounted locking lever (86) mounted on the frame member (58,60) for selective movement of the lever (96) in and out of engagement with a slot (100) constituting the said part of the corresponding receiving means.

7. A vehicle as claimed in any preceding claim in which the frame includes housing means (14) detachably (46) secured thereto.

8. A vehicle as claimed in Claim 7 in which the housing 14 is secured to the frame members (58,60) by cooperating sliding track members (40,42).

9. A vehicle as claimed in any preceding claim and including weight measuring means on the extender to indicate the weight on the extender, the weight measuring means including a weight indicator scale (106) and an indicator member (102) adapted to move relative thereto as the extender is loaded.

10. A vehicle as claimed in any preceding claim and including overweight sensing means comprising an electrical sensor (110) and an indicator (112).

Fig.1.

Fig.2

2/2

0005328

Fig 3

Fig 4

Fig 6

Fig 5

## DOCUMENTS CONSIDERED TO BE RELEVANT

| Category | Citation of document with indication, where appropriate, of relevant passages | Relevant to claim |
|---|---|---|
| X | US - A - 2 179 586 (CARPENTER) <br> * Whole patent * <br><br> -- | 1-3,5 |
| X | US - A - 2 509 794 (ANDERSON) <br> * Whole patent * <br><br> -- | 1,2,7 |
| X | US - A - 2 198 270 (MARANVILLE) <br> * Whole patent * <br><br> -- | 1,2,4 |
| X | GB - A - 328 061 (MASTERS) <br> * Complete specification * <br><br> -- | 1-3,6 |
| X | US - A - 3 858 173 (RYAN) <br> * Abstract; claims * <br><br> -- | 1,9,10 |
| X | US - A - 3 891 964 (GEIGER) <br> * Abstract; claims * <br><br> -- | 1,9,10 |
| X | FR - A - 1 114 756 (MICAULT) <br> * Whole patent * <br><br> -- | 1,9,10 |
| X | FR - A - 1 537 701 (GONZATO) <br> * Whole patent * <br><br> -- | 1,9,10 |

./.

**CLASSIFICATION OF THE APPLICATION (Int. Cl.²)**

B 62 D 63/06
B 60 P 5/00

**TECHNICAL FIELDS SEARCHED (Int.Cl.²)**

B 60 D
B 62 D
B 60 P

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 16-07-1979 | SCHMAL |

EPO Form 1503.1 06.78

## EUROPEAN SEARCH REPORT

| Category | DOCUMENTS CONSIDERED TO BE RELEVANT | | CLASSIFICATION OF THE APPLICATION (Int. Cl.²) |
|---|---|---|---|
| | Citation of document with indication, where appropriate, of relevant passages | Relevant to claim | |
| X | <u>CH - A - 483 944</u> (MATILLE et al.) <br> * Whole patent * | 1,9,10 | |
| | -- | | |
| X | <u>US - A - 2 779 013</u> (CHOTRO) <br> * Column 1, line 1 to column 2, line 8 * | 1,9,10 | |
| | -- | | |
| | <u>US - A - 2 187 136</u> (MELLINGER) <br> * Figures 1,2; legends * | 1-3 | TECHNICAL FIELDS SEARCHED (Int. Cl.²) |
| | -- | | |
| | <u>CH - A - 322 107</u> (MARCHETTI) <br> * Figure 2; legend * | 1-3 | |
| | -- | | |
| | <u>FR - E - 52 001</u> (PASCAL) <br> * Whole patent * | 1,2 | |
| | -- | | |
| A | <u>GB - A - 483 261</u> (GAD) <br> * Figures 1,2; legends * | 1,6 | |
| | ---- | | |

EPO Form 1503.2  06.78